# EUROPEAN PATENT SPECIFICATION

(11) **EP 2 231 436 B1**
(45) Date of publication and mention of the grant of the patent: **25.01.2012**
(21) Application number: 08860101.8
(22) Date of filing: 09.12.2008
(51) Int. Cl.: B60K 25/06, B60K 17/28

(54) **METHOD AND DEVICE FOR CONTROL OF POWER TAKEOFF OPERATION, AND VEHICLE**
VERFAHREN UND VORRICHTUNG ZUR STEUERUNG DES LEISTUNGSSTARTBETRIEBS SOWIE FAHRZEUG
PROCÉDÉ ET DISPOSITIF DE COMMANDE DE L'ACTION DE PRISE DE FORCE, ET VÉHICULE

(30) Priority: 13.12.2007 SE 0750013
(43) Date of publication of application: 29.09.2010
(73) Proprietor: Scania CV AB (PUBL), 151 87 Södertälje (SE)
(72) Inventor: UDD, Jonas, S-112 23 Stockholm (SE); BRANDT, Fredrik, S-147 32 Tumba (SE)
(86) International application number: PCT/SE2008/051426
(87) International publication number: WO 2009/075638

(56) References cited:
- JP-A- 2 197 424
- JP-A- 2000 283 189
- US-A- 3 669 229
- US-A- 4 496 105
- US-A- 5 794 734
- US-A1- 2007 209 355

## Description

### BACKGROUND

### Technical field

The present invention relates to a method according to the introductory part of the attached claim 1.

The invention relates further to a device according to the introductory part of the attached claim 4.

The invention relates also to a vehicle according to the attached claim 8.

### STATE OF THE ART

Technology substantially as above is prior art. Many kinds of utility vehicles, e.g. timber trucks and other kinds of freight vehicles, are provided with a power takeoff adapted to being driven via the vehicle's gearbox and to itself driving a hydraulic pump by which a consumption point, e.g. a loading/unloading crane, is supplied with power via a pressurised pressure medium.

When the power takeoff is engaged, it thus drives the hydraulic pump which supplies power to the consumption point at which the power, e.g. a pressure of a hydraulic medium, is utilised.

At times when no power is being used at the consumption point, i.e. when no consumer at the consumption point is in operation, the hydraulic system has to be discharged to prevent the pressure built up by the hydraulic pump from becoming too high. The prior art achieves this by means of a bypass valve, a shunt, which is adapted to opening a connection between the hydraulic arrangement's suction line and pressure line, thereby discharging built-up pressure to a hydraulic medium tank of the hydraulic arrangement.

The prior art entails disadvantages in the form of the cost of the bypass valve and its fitting and maintenance. Should the bypass valve not function, considerable damage may be caused to the hydraulic medium circuit and at the consumption point.

### OBJECT OF THE INVENTION

The object of the present invention is to eliminate the need for the bypass arrangement and thereby achieve both an economic saving and a higher safety level.

### SUMMARY OF THE INVENTION

This object is achieved with a method, a device and a vehicle of the kind mentioned in the introduction with features according to the characterising parts of the respective independent claims 1, 4 and 8.

Further advantages are afforded by what is indicated in the respective dependent claims.

### BRIEF DESCRIPTION OF THE DRAWING

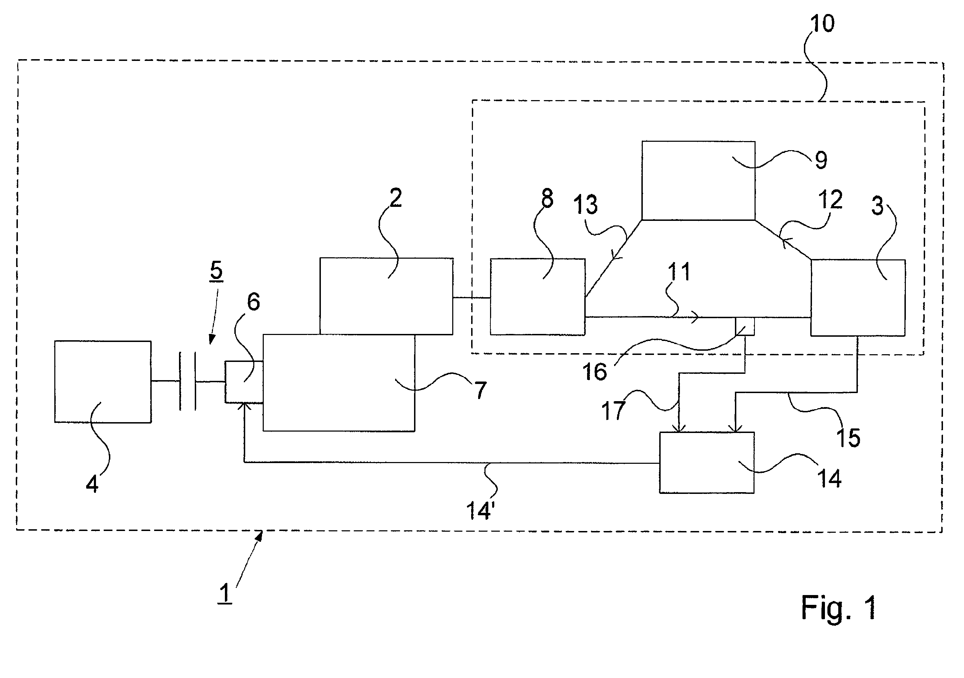

A better understanding of the present invention should be arrived at by reading the following detailed description together with the attached drawing, in which
- Fig. 1 depicts schematically a skeleton diagram of an embodiment of a device according to the invention for control of power takeoff operation.

In Fig. 1, ref. 1 denotes a vehicle comprising a power takeoff 2 which may be intended, when engaged, to power at least one consumption point 3. Thus in the case of, for example, timber trucks, there may be a consumption point in the form of a crane, not depicted.

Ref. 4 denotes the vehicle's engine, which is adapted to driving, via an automatic clutch 5 with automatic clutch cylinder means 6, a gearbox 7 which is itself adapted to driving the power takeoff 2.

The power takeoff 2 is adapted to supplying power to pump means 8 adapted to pressurising a pressure medium, represented by a pressure medium tank 9, in order to supply at least one consumption point 3 with pressurised pressure medium. For the generation of pressure in this context, the pump means 8 form part of a pressure medium circuit denoted by ref. 10 with a pressure line 11 running from said pump means to a consumption point 3, a return line 12 running to the tank 9 and a suction line 13 running from the tank 9 to the pump means 8. A schematic composition of a pressure medium circuit 10 for the purpose here concerned is thus described. Pressure medium circuits are of course conceivable which comprise a plurality of consumption points 3, lines, tanks and even a plurality of pump means 8 driven by the power takeoff.

According to the invention, for control of the pressurisation of the pressure medium in the pressure medium circuit, the power takeoff is adapted to being engaged/disengaged by the automatic clutch in such a way that when the automatic clutch is placed in a non-driving position, depicted in the diagram, the driving of the gearbox and hence the driving of the power takeoff cease, resulting in cessation of pressure build-up by the pump means 8.

According to the embodiment depicted, a control unit 14 of the vehicle is adapted to controlling by means of signals 14' the engagement/disengagement of the power takeoff by causing the automatic clutch cylinders of said automatic clutch to engage/disengage the automatic clutch. The control unit may be the vehicle's central control unit or a separate control unit for controlling the operation of the power takeoff.

According to a control version, the power takeoff is intended to be disengaged when no consumption point is being used, to which end the use of available consumption points is detectable and corresponding information is intended to be transmitted to the respective control unit in the form of signals 15, as schematically depicted in Fig. 1.

According to another control version, the respective control unit is adapted to causing the automatic clutch to disengage the power takeoff when a detected pressure in a pressure medium circuit supplied with power by the power takeoff exceeds a predetermined value. To this end, sensor means 16 are provided to detect the pressure in the pressure line 11 of the pressure medium circuit and deliver to the respective control unit signals 17 containing information about pressures detected.

Embodiments are also conceivable in which the two versions described are used in combination, whereby both use of the consumption point and pressure in the pressure medium circuit are detected as a basis for controlling the engagement/disengagement of the power takeoff.

The method and also the function of the device according to the invention are probably substantially and sufficiently indicated above.

To prevent undesirable pressure build-up and undesirable overpressure in the pressure medium circuit supplied with power by the power takeoff, the power takeoff is adapted to being engaged/disengaged by the vehicle's automatic clutch which is controlled by a control unit, e.g. the vehicle's central control unit, whereby the power takeoff is disengaged if no consumption point is in operation and/or if a predetermined pressure is exceeded. The power takeoff is re-engaged at least when any consumption point is brought into operation, thereby resuming the supply of pressurised pressure medium.

The result is extremely good control of the status of the pressure medium circuit while at the same time substantially available components and arrangements of the vehicle are used. Thus the automatic clutch is also controlled in normal circumstances by the vehicle's central control unit. Extra components, the laying of lines and bypass valve maintenance in a shunt arrangement are dispensed with.

The invention is described above in relation to embodiment examples and preferred embodiments.

Further embodiments as well as minor additions and modifications are of course conceivable without departing from the basic idea of the invention.

According to preferred embodiments, the pump means 8 are hydraulic pump means and the pressure medium is hydraulic oil. Versions with air as pressure medium are also conceivable, in which case the power takeoff is adapted to driving an air compressor as pump means 8.

The invention is thus not to be regarded as limited to the embodiments indicated above, but may be varied within its scope indicated by the attached claims.

## Claims

1. A method for controlling the operation of a vehicle's power takeoff which is driven via a gearbox provided with an automatic clutch and is adapted to supplying power to pump means for pressurisation of pressure medium for at least one consumption point, the method comprises the step of engaging and disengaging said power takeoff (2) by means of said automatic clutch (5) for control of the pressurisation, the engagement/disengagement of the power takeoff is controlled by a control unit (14), e.g. the vehicle's central control unit, which controls said automatic clutch **characterised in that** the control unit (14) is adapted to causing the automatic clutch (5) to disengage the power takeoff when the pressure in a pressure medium circuit (10) supplied with power by the power takeoff exceeds a detected predetermined value.

2. A method according to claim 1, in which the power takeoff is disengaged when no consumption point (3) is being used.

3. A method according to any one of the foregoing claims, in which the pump means (8) is a hydraulic pump means and the pressure medium is hydraulic oil.

4. A device for controlling the operation of a vehicle's power takeoff which is driven via a gearbox provided with an automatic clutch and is adapted to supplying power to pump means for pressurisation of pressure medium for at least one consumption point, the device comprises devices (5, 6, 14, 15, 16, 17) for controlling the engagement/disengagement of the power takeoff (2) by means of said automatic clutch (5) for control of the pressurisation where a control unit (14) of the vehicle, e.g. the vehicle's central control unit, is adapted to controlling the engagement/disengagement of the power takeoff (2) by controlling said automatic clutch (5), **characterised in that** said control unit (14) is adapted to causing the automatic clutch (5) to disconnect the power takeoff (2) when a detected pressure in a pressure medium circuit (10) supplied with power by the power takeoff exceeds a predetermined value.

5. A device according to claim 4, in which the power takeoff (2) is intended to be disengaged when no consumption point (3) is being used.

6. A device according to claim 5, in which use of available consumption points is detectable.

7. A device according to claim 4, 5, or 6, , in which the pump means is a hydraulic pump means and the pressure medium is hydraulic oil.

8. A vehicle, e.g. a truck, bus or tractor unit, **characterised by** a device according to any one of claims 4-7.

## Patentansprüche

1. Verfahren zum Steuern des Betriebs eines Fahrzeugabtriebmittels, das über ein mit einer automatischen Kupplung versehenes Getriebe angetrieben wird und zum Zuführen von Leistung zu einem Pumpmittel zur Druckbeaufschlagung eines Druckmediums für wenigstens einen Verbrauchspunkt ausgebildet ist, wobei das Verfahren den Schritt des Ineingriffbringens oder Außereingriffbringens der des Abtriebmittels (2) über die automatische Kupplung (5) zum Steuern der Druckbeaufschlagung umfasst, wobei das Ineingriffbringen/Außereingriffbringen des Abtriebs durch eine Steuereinheit (14) steuerbar ist, beispielsweise die zentrale Steuereinheit des Fahrzeugs, die die automatische Kupplung steuert,
**dadurch gekennzeichnet, dass** die Steuereinheit (14) dazu ausgelegt ist, die automatische Kupplung (5) außer Eingriff mit der dem Abtriebsmittel zu bringen, wenn der Druck in einem Druckmediumkreislauf (10), der durch das Abtriebsmittel mit Leistung versorgt wird, einen erfassten vorbestimmten Wert überschreitet.

2. Verfahren nach Anspruch 1, wobei das Abtriebsmittel außer Eingriff ist, wenn kein Verbrauchspunkt verwendet wird.

3. Verfahren nach einem der voranstehenden Ansprüche, wobei das Pumpmittel (8) ein hydraulisches Pumpmittel und das Druckmedium ein hydraulisches Öl ist.

4. Vorrichtung zum Steuern des Betriebs eines Fahrzeugabtriebsmittels, das über ein mit einer automatischen Kupplung versehenes Getriebe angetrieben wird und zum Versorgen eines Pumpmittels zum Druckbeaufschlagen eines Druckmediums für wenigstens einen Verbrauchspunkt ausgebildet ist, wobei die Vorrichtung Einrichtungen (5, 6, 14, 15, 16, 17) zum Steuern des Ineingriffbringens/Außereingriffbringens des Abtriebsmittels (2) über die automatische Kupplung (5) zum Steuern der Druckbeaufschlagung aufweist, wobei die Steuereinheit (14) des Fahrzeugs, beispielsweise die zentrale Steuereinheit des Fahrzeugs, zum Steuern des Ineingriffbringens/Außereingriffbringens des Abtriebsmittels (2) durch Steuern der automatischen Kupplung (5) ausgebildet ist,
**dadurch gekennzeichnet, dass** die Steuereinheit (14) die automatische Kupplung zum Entkoppeln der Abtriebsmittels (2) veranlasst, wenn ein erfasster Druck in einem Druckmediumkreislauf (10), der mit Leistung über das Abtriebsmittel versorgt wird, einen vorbestimmten Wert überschreitet.

5. Vorrichtung nach Anspruch 4, wobei der Abtrieb (2) sich außer Eingriff befindet, wenn kein Verbrauchspunkt (3) verwendet wird.

6. Vorrichtung nach Anspruch 5, wobei die verfügbaren Verbrauchspunkte erfassbar sind.

7. Vorrichtung nach einem der Ansprüche 4, 5 oder 6, wobei das Pumpmittel ein hydraulisches Pumpmittel und das Druckmedium ein hydraulisches Öl ist.

8. Fahrzeug, beispielsweise ein Lastkraftwagen, ein Bus oder eine Zugeinheit, **gekennzeichnet durch** eine Vorrichtung nach einem der Ansprüche 4 bis 7.

## Revendications

1. Procédé pour commander le fonctionnement d'une prise de force d'un véhicule, qui est entraînée par l'intermédiaire d'une boîte de vitesses munie d'un embrayage automatique et qui est adaptée de façon à délivrer de l'énergie à des moyens formant pompe pour la compression d'un milieu de pression pour au moins un point de consommation, le procédé comprenant l'étape de mise en prise et de désengagement de ladite prise de force (2) à l'aide dudit embrayage automatique (5) pour la commande de la compression, les mise en prise/désengagement de la prise de force étant commandés par une unité de commande (14), par exemple l'unité de commande centrale du véhicule, qui commande ledit embrayage automatique, **caractérisé en ce que** l'unité de commande (14) est adaptée de façon à provoquer le désengagement par l'embrayage automatique (5) de la prise de force lorsque la pression dans un circuit de milieu de pression (10) alimenté en énergie par la prise de force dépasse une valeur prédéterminée détectée.

2. Procédé selon la revendication 1, dans lequel la prise de force est désengagée lorsqu'aucun point de consommation (3) n'est utilisé.

3. Procédé selon l'une quelconque des revendications précédentes, dans lequel les moyens formant pompe (8) sont des moyens formant pompe hydraulique et le milieu de pression est une huile hydraulique.

4. Dispositif pour commander le fonctionnement d'une prise de force d'un véhicule, qui est entraîné par l'intermédiaire d'une boîte de vitesses munie d'un embrayage automatique et qui est adapté de façon à délivrer de l'énergie à des moyens formant pompe pour la compression d'un milieu de pression pour au moins un point de consommation, le dispositif comprenant des dispositifs (5, 6, 14, 15, 16, 17) pour commander les mise en prise/désengagement de la prise de force (2) à l'aide dudit embrayage automatique (5) pour la commande de la compression, une unité de commande (14) du véhicule, par exemple l'unité de commande centrale du véhicule, étant adaptée de façon à commander les mise en prise/désengagement de la prise de force (2) par commande dudit embrayage automatique (5), **caractérisé en ce que** ladite unité de commande (14) est adaptée de façon à provoquer la déconnexion par l'embrayage automatique (5) de la prise de force (2) lorsqu'une pression détectée dans un circuit de milieu de pression (10) alimenté en énergie par la prise de force dépasse une valeur prédéterminée.

5. Dispositif selon la revendication 4, dans lequel la prise de force (2) est conçue pour être désengagée lorsqu'aucun point de consommation (3) n'est utilisé.

6. Dispositif selon la revendication 5, dans lequel l'utilisation de points de consommation disponibles est détectable.

7. Dispositif selon la revendication 4, 5 ou 6, dans lequel les moyens formant pompe sont des moyens formant pompe hydraulique et le milieu de pression est une huile hydraulique.

8. Véhicule, par exemple camion, autobus ou unité de tracteur, **caractérisé par** un dispositif selon l'une quelconque des revendications 4 à 7.
